# EUROPÄISCHE PATENTANMELDUNG

(11) **EP 2 009 563 A1**
(43) Veröffentlichungstag der Anmeldung: **31.12.2008**
(21) Anmeldenummer: 07012534.9
(22) Anmeldetag: 26.06.2007
(51) Int. Cl.: G06F 17/50

(54) **Verfahren zur rechnergestützten Ermittlung eines Klimatisierungssystems zur Kühlung einer technischen Anlage**

(71) Anmelder: SIEMENS AKTIENGESELLSCHAFT, 80333 München (DE)
(72) Erfinder: Oubda, Tilado Saidou, Dr., 1120 Wien (AT)

(57) **Zusammenfassung**

Die Erfindung betrifft ein Verfahren zur rechnergestützten Ermittlung eines Klimatisierungssystems zur Kühlung einer technischen Anlage (1) bei dem:
a) Parameter der technischen Anlage (1) und Raumparameter betreffend einen Raum (2), in dem die technische Anlage (1) aufzustellen ist, bereitgestellt werden;
b) für mehrere Klimatisierungssysteme, welche durch jeweilige Klimatisierungsparameter charakterisiert sind, jeweils die Wärmeverteilung der technischen Anlage (1) auf der Basis der Parameter der technischen Anlage (1), der Raumparameter und der jeweiligen Klimatisierungsparameter simuliert wird;
c) auf der Basis der simulierten Wärmeverteilungen unter Berücksichtigung von Klimatisierungsvorgaben aus den mehreren Klimatisierungssystemen dasjenige ermittelt wird, welches in Bezug auf ein oder mehrere vorbestimmte Kriterien optimal ist und die Klimatisierungsvorgaben erfüllt.

## Beschreibung

Die Erfindung betrifft ein Verfahren zur rechnergestützten Ermittlung eines Klimatisierungssystems zur Kühlung einer technischen Anlage sowie ein entsprechendes Computerprogrammprodukt.

Um Beschädigungen an technischen Anlagen während deren Betrieb zu vermeiden, werden häufig entsprechende Klimatisierungssysteme eingesetzt, mit denen der Raum klimatisiert wird, in dem sich die technische Anlage während des Betriebs befindet. Durch Einstellung einer geeigneten Raumtemperatur wird vermieden, dass es zur Überhitzung und somit zur Zerstörung der Komponenten der technischen Anlagen kommt. Solche Überhitzungen treten insbesondere bei sog. IT-Anlagen (IT = Informationstechnologie) auf, bei denen durch eine oder mehrere elektronische Prozessoren Berechnungen durchgeführt werden, wobei sich die Prozessoren während des Rechenbetriebs oftmals stark erhitzen.

Heutzutage wird die zur Kühlung einer technischen Anlage benötigte Leistung oftmals nur anhand der Datenblätter der Hersteller der technischen Anlage abgeschätzt. Dies führt oftmals dazu, dass die Kühlleistung des zur Kühlung verwendeten Klimatisierungssystems wegen der ungenauen Abschätzung meist stark überdimensioniert wird, um auch tatsächlich sicherzustellen, dass keine Beschädigung bzw. Zerstörung der technischen Anlage aufgrund Überhitzung auftritt. Dies führt jedoch zu einer zu hoch eingestellten Leistung des Klimatisierungssystems, was wiederum unnötig hohe Betriebskosten mit sich bringt.

Aufgabe der Erfindung ist es deshalb, ein Verfahren zur rechnergestützten Ermittlung eines Klimatisierungssystems zur Kühlung einer technischen Anlage zu schaffen, mit welchem bedarfsgerecht und anlagenspezifisch das für die Kühlung zu verwendende Klimatisierungssystem festgelegt wird.

Diese Aufgabe wird durch die unabhängigen Patentansprüche gelöst. Weiterbildungen der Erfindung sind in den abhängigen Ansprüchen definiert.

In dem erfindungsgemäßen Verfahren, welches computergestützt durchgeführt wird, werden in einem ersten Schritt a) Parameter der technischen Anlage und Raumparameter betreffend einen Raum, in dem die technische Anlage aufzustellen ist, bereitgestellt. Diese Daten liegen in digitalisierter Form vor, damit sie durch einen Computer verarbeitet werden können. Auf der Basis dieser Daten wird in einem Schritt b) für mehrere Klimatisierungssysteme, welche durch jeweilige Klimatisierungsparameter charakterisiert sind, jeweils die Wärmeverteilung der technischen Anlage auf der Basis der Parameter der technischen Anlage, der Raumparameter und der jeweiligen Klimatisierungsparameter simuliert. Die Klimatisierungsparameter liegen hierbei auch in digitalisierter Form zur Verarbeitung durch einen Computer vor. Schließlich wird in einem Schritt c) auf der Basis der simulierten Wärmeverteilungen unter Berücksichtigung von Klimatisierungsvorgaben aus den mehreren Klimatisierungssystemen dasjenige ermittelt, welches in Bezug auf ein oder mehrere vorbestimmte Kriterien optimal ist und die Klimatisierungsvorgaben erfüllt. Auch die Klimatisierungsvorgaben sind digitale Daten, welche durch einen Computer in dem erfindungsgemäßen Verfahren verarbeitet werden können.

Das erfindungsgemäße Verfahren stellt ein Werkzeug bereit, mit dem computergestützt vor dem eigentlichen Einbau eines Klimatisierungssystems bestimmt werden kann, welches Klimatisierungssystem sich am Besten für die technische Anlage und den Raum eignet, in dem die technische Anlage aufgestellt ist. Auf diese Weise können entsprechend den Wünschen und Bedürfnissen der Betreiber der technischen Anlage maßgeschneiderte Klimatisierungssysteme vorab bestimmt werden, so dass nur noch wenige bzw. keine Messungen im Realbetrieb der technischen Anlage zur Spezifikation des optimalen Klimatisierungssystems durchgeführt werden müssen.

Die Simulationen, welche in Schritt b) für unterschiedliche Auslegungen bzw. Konfigurationen von Klimatisierungssystemen durchgeführt werden, sind insbesondere Simulationen, welche aus dem Stand der Technik bekannt sind und dort für andere Anwendungsgebiete bereits erfolgreich eingesetzt werden. Es handelt sich dabei vorzugsweise um sog. CFD-Simulationen der numerischen Strömungsberechnung (CFD = Computational Fluid Dynamics). Es sind eine Vielzahl von kommerziellen und nichtkommerziellen CFD-Programmen für die Simulationen in Schritt b) verfügbar. Beispiele solcher kommerziellen Programme sind CFX, Flovent, Fluent, ANSYS, Star-CD, Phoenics, etc. Die Grundlage dieser Verfahren bilden die Erhaltungssätze der Physik für Masse, Impuls und Energie. Ergänzend werden zum Teil auch empirische Ansätze (Turbulenz, Wärmeübertragung zur Oberfläche, etc.) verwendet. Die Erhaltungsgleichungen führen zu einem System von partiellen Differentialgleichungen, die in diskretisierter Form mit Hilfe geeigneter Algorithmen iterativ gelöst werden. Weil der Lösungsbereich typischerweise in tausende von Kontrollvolumina oder Rechenzellen unterteilt wird, spricht man bei diesem Verfahren auch häufig von Feldmodellen. Die Erhaltungsgleichungen müssen in jedem Kontrollvolumen erfüllt werden. Mit der CFD-Methode lässt sich beispielsweise der gekoppelte Infrarot-Strahlungsaustausch von Oberfläche zu Oberfläche und die Wärmeleitung im Festkörper modellieren. Bei der Verwendung der CFD-Programme werden entsprechende Geometrie- und Materialdaten in das Programm eingegeben und geeignete Randbedingungen gewählt. Die Wahl der Randbedingungen, beispielsweise der Außen- und der Innentemperatur, der Strahlungsintensitäten oder des mechanischen Luftstroms, hat dabei einen wesentlichen Einfluss auf die Resultate. Die Anwendung der CFD-Methode im Bereich von Klimatisierungssystemen, insbesondere für IT-Anlagen, ist noch nicht bekannt. Die Methode wurde jedoch in anderen zahlreichen Anwendungsbereichen erfolgreich eingesetzt, wobei die Resultate mit Hilfe von experimentellen Daten validiert wurden. Ein Anwendungsbereich sind beispielsweise Fahrzeug-Simulationen, insbesondere die Untersuchung und Optimierung des thermischen Managements in einem virtuellen Fahrzeug.

In einer bevorzugten Ausführungsform des erfindungsgemäßen Verfahrens werden als simulierte Wärmeverteilungen Temperatur- und/oder Luftströmungsverteilungen ermittelt, welche vorzugsweise über eine graphische Benutzerschnittstelle wiedergegeben werden und somit einem Benutzer schnell und intuitiv die Information liefern, ob die Simulation den gewünschten Klimatisierungsvorgaben entspricht.

In einer Ausführungsform der Erfindung fließen in die Simulationen auch im Realbetrieb der technischen Anlage und des Klimatisierungssystems ermittelte Parameter ein. Durch die Anpassung der Simulationen an experimentell bestimmte Parameter können die Resultate der Simulationen verbessert werden.

Das eine oder die mehreren vorbestimmten Kriterien, für welche das Klimatisierungssystem optimiert werden, können beliebig festgelegt werden. Vorzugsweise betreffen die Kriterien jedoch die Betriebskosten des Klimatisierungssystems, wobei als optimales Klimatisierungssystem in Schritt c) dasjenige ermittelt wird, welches die niedrigsten Betriebskosten bei gleichzeitiger Erfüllung der Klimatisierungsvorgaben aufweist.

In einer bevorzugten Ausführungsform umfassen die vorbestimmten Kriterien den Energiebedarf des Klimatisierungssystems, wobei als optimales Klimatisierungssystem in Schritt c) dasjenige ermittelt wird, welches den niedrigsten Energiebedarf bei gleichzeitiger Erfüllung der Klimatisierungsvorgaben aufweist.

Die Parameter der technischen Anlage, welche bei den Simulationen als Eingangsparameter einfließen, können je nach Anwendungsfall beliebig sein, es handelt sich jedoch vorzugsweise um thermische Parameter der in der technischen Anlage verbauten Anlageteile, insbesondere um die Verlustwärme der Anlageteile. Die Raumparameter werden vorzugsweise durch geometrische Parameter des Raums (beispielsweise in der Form von CAD-Daten) charakterisiert, insbesondere durch die Abmessungen des Raums mit der darin positionierten technischen Anlage und den Positionen des Eintritts und Austritts der Kühlluft des Klimatisierungssystems.

Die Klimatisierungsparameter, welche im erfindungsgemäßen Verfahren in Schritt b) berücksichtigt werden, umfassen insbesondere Betriebsparameter des Klimatisierungssystems, wie z.B. den Ein- und Austritt des Kühlluftstroms des Klimatisierungssystems, insbesondere die in einer Zeiteinheit in den Raum eintretende und/oder austretende Kühlluft und/oder die Temperatur des Kühlluftstroms bei Eintritt in den Raum und/oder Austritt aus dem Raum.

Die Klimatisierungsvorgaben, welche bei der Bestimmung des optimalen Klimatisierungssystems in Schritt c) berücksichtigt werden, sind vorzugsweise Betriebssicherheitsvorgaben zur Vermeidung von Beschädigungen der technischen Anlage. Diese Betriebsvorgaben betreffen insbesondere einzuhaltende Grenztemperaturen im Raum und/oder Parametergrenzwerte der technischen Anlage. Auf diese Weise wird die Auswahl eines geeigneten Klimatisierungssystems festgelegt, welches auch im langfristigen Betrieb genügend Kühlleistung zur Vermeidung von Beschädigungen bzw. Zerstörungen der technischen Anlage durch Überhitzung vermeidet. Parametergrenzwerte der technischen Anlage, welche als Betriebssicherheitsvorgaben berücksichtigt werden können, sind beispielsweise der minimal erforderliche Kühlluftstrom einzelner in der Anlage verbauter Anlageteile und/oder eine maximale Kühlluft-Eintrittstemperatur für einzelne Anlageteile.

Um die in dem erfindungsgemäßen Verfahren verarbeiteten Parameter bereitzustellen und auch die Ergänzung mit neuen Parametern zu ermöglichen, wird in einer besonders bevorzugten Ausführungsform der Erfindung eine Datenbank verwendet, in der die Parameter der technischen Anlage und/oder die Raumparameter und/oder die Klimatisierungsvorgaben zumindest teilweise hinterlegt sind.

Das erfindungsgemäße Verfahren kann für beliebige technische Anlagen eingesetzt werden. Als Beispiele sind die folgenden Anlagen denkbar:
- eine IT-Anlage, insbesondere ein oder mehrere Server, beispielsweise Applikationsanlagen in der Form von Internet-Server-Farms bzw. Intranet-Server-Farms bzw. Verwaltungsnetzen;
- eine Telekommunikationsanlage, insbesondere eine Mobilfunknetz- oder Festnetz-Anlage;
- eine medizintechnische Anlage;
- eine Stromversorgungsanlage;
- eine elektrotechnische Anlage;
- eine mechanische Anlage.

Als Stromversorgungsanlagen kommen in dem erfindungsgemäßen Verfahren insbesondere eine Stromrichterhalle, ein Niederspannungswerk, eine Umspannanlage, eine Schaltanlage bzw. ein Lastverteilerwerk in Betracht.

Neben dem oben beschriebenen Verfahren betrifft die Erfindung ferner ein Computerprogrammprodukt mit einem auf einem maschinenlesbaren Träger gespeicherten Programmcode zur Durchführung jeder Variante des oben beschriebenen erfindungsgemäßen Verfahrens, wenn das Programm auf einem Rechner abläuft.

Ausführungsbeispiele der Erfindung werden nachfolgend anhand der beigefügten Figuren detailliert beschrieben.

Es zeigen:
- Fig. 1: eine perspektivische Darstellung einer technischen Anlage in der Form eine Schaltschranks, dessen Wär- meverteilung in einer Ausführungsform des erfindungsgemäßen Verfahrens simuliert wird;
- Fig. 2: eine perspektivische Darstellung eines Raummodells, in dessen Inneren der Schaltschrank gemäß Fig. 1 zur Simulation der Wärmeverteilung positioniert wird;
- Fig. 3: eine schematische Darstellung einer mit einer Ausführungsform des erfindungsgemäßen Verfahrens simulierten Temperaturverteilung in einer y-Schnittebene in dem Raummodell der Fig. 2 mit dem darin positionierten Schaltschrank der Fig. 1 und einer Klimatisierung durch ein entsprechendes Klimatisierungssystem;
- Fig. 4: eine Darstellung analog zu Fig. 3, wobei die Stromlinien der Kühlluftströmung im Raum wiedergegeben sind;
- Fig. 5: eine Darstellung analog zu Fig. 3, wobei die Iso-Temperaturfläche von 300 Kelvin wiedergegeben ist; und
- Fig. 6: eine Darstellung analog zu Fig. 3, wobei die Geschwindigkeitsvektoren der Kühlluftströmung in einer z-Schnittebene wiedergegeben sind.

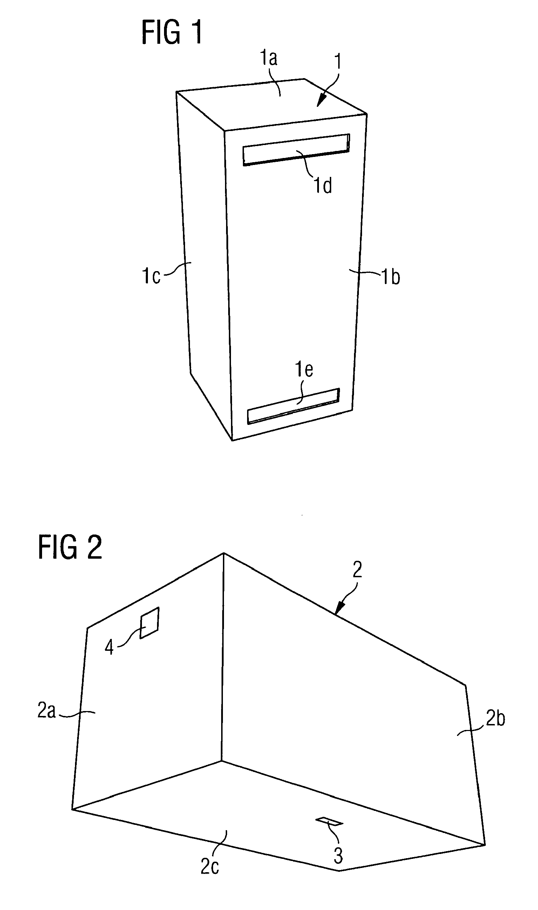

Fig. 1 zeigt in perspektivischer Darstellung eine IT-Anlage in der Form eines Schaltschranks 1, in dem entsprechende elektronische Komponenten untergebracht sind, welche bei ihrem Betrieb Wärme erzeugen. Bei der Anlage 1 kann es sich um eine Telekommunikationsanlage handeln, beispielsweise um eine Mobilfunknetzanlage in der Form eines MSC (MSC = Mobile Switching Center). Die Oberseite des Schaltschranks ist mit 1a, die Vorderseite mit 1b und die rechte Seitenfläche mit 1c bezeichnet. Ferner weist der Schrank eine obere Öffnung 1d und eine untere Öffnung 1e auf. In der nachfolgend beschriebenen Ausführungsform der Erfindung wird die Wärmeverteilung des Schaltschranks 1 in einem modellierten Raum simuliert, wobei der modellierte Raum als Raummodell in Fig. 2 wiedergegeben ist.

Bei dem Raummodell der Fig. 2 handelt es sich um einen quaderförmigen Raum 2 mit Seitenwänden 2a und 2b sowie einem Boden 2c. In dem Raummodell ist ferner eine Eintrittsöffnung 3 zum Eintritt eines Kühlluftstroms eines (nicht gezeigten) Klimatisierungssystems sowie eine entsprechende Austrittsöffnung 4 zum Austritt des Luftstroms aus dem Raum 2 wiedergegeben.

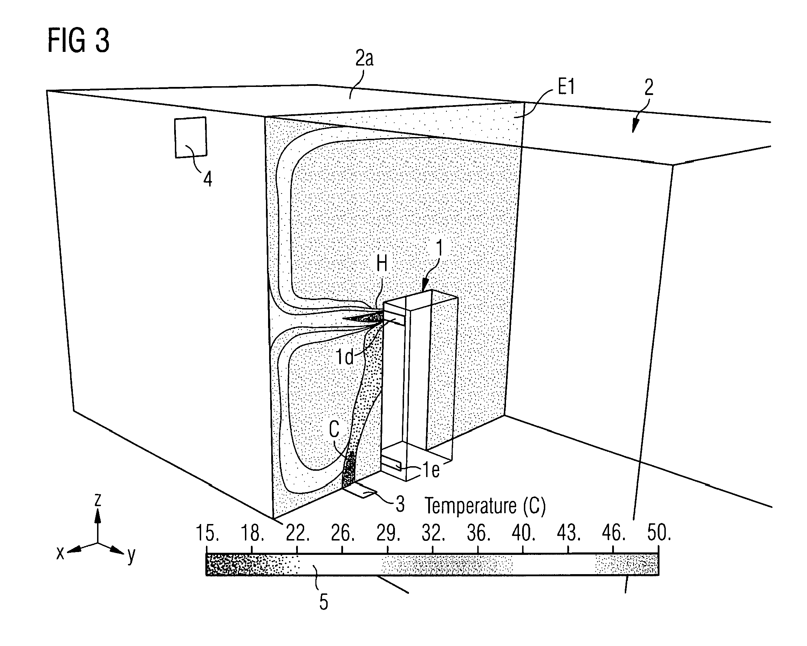

In dem erfindungsgemäßen Verfahren fließen die geometrische Ausgestaltung des Schaltschranks gemäß Fig. 1 sowie die geometrische Ausgestaltung des Raummodells gemäß Fig. 2 als Parameter ein. Darüber hinaus wird die Position des Schaltschranks 1 innerhalb des Raums 2 berücksichtigt. Diese Position ist aus Fig. 3 ersichtlich, bei der der Schaltschrank 1 im Wesentlichen mittig im Raum 2 versetzt hinter der Eintrittsöffnung 3 positioniert ist.

In der hier beschriebenen Variante des erfindungsgemäßen Verfahrens werden eine Vielzahl von verschiedenen Klimatisierungsszenarien rechnergestützt berechnet. Die verschiedenen Klimatisierungsszenarien entsprechen hierbei unterschiedlichen Auslegungen von verwendeten Klimatisierungssystemen, wobei die Parameter der Klimatisierungssysteme insbesondere das in einer Zeiteinheit über die Öffnung 3 einströmende Kühlluftvolumen und dessen Temperatur sowie die Menge der an der Austrittsöffnung 4 ausströmenden Kühlluft und deren Temperatur umfassen. Bei der erfindungsgemäßen Simulation werden ferner weitere Parameter der technischen Anlage 1 berücksichtigt, welche bei der Wärmeabgabe der Anlage eine Rolle spielen. Dies sind insbesondere thermische Parameter der einzelnen Bauteile der Anlage, wie z.B. die Verlustwärme der Bauteile, den für die einzelnen Bauteile erforderlichen Kühlluftstrom, die maximale Kühlluft-Eintrittstemperatur für die einzelnen Bauteile und dergleichen. Die im erfindungsgemäßen Verfahren verwendeten Parameter sind in einer Datenbank hinterlegt, auf welche das Verfahren bei der Simulation zugreift.

In der hier beschriebenen Variante des erfindungsgemäßen Verfahrens wird eine bereits etablierte numerische Methode zur Strömungssimulation der Wärmeströmung der Anlage 1 im Raum 2 eingesetzt. Insbesondere wird ein CFD-Programm (CFD = Computational Fluid Dynamics) verwendet. Bei der Simulation gemäß der hier beschriebenen Ausführungsform wurde das kommerzielle Programm Star-CD eingesetzt. Als Ergebnis der Simulation erhält man für verschiedene Klimatisierungsszenarien, bei denen die Klimatisierungsparameter des Klimatisierungssystems variiert wurden, verschiedene Wärmeverteilungen im Raum. Anschließend wird in dem erfindungsgemäßen Verfahren gemäß festgelegter Klimatisierungsvorgaben dasjenige Klimatisierungssystem ausgewählt, welches die Klimatisierungsvorgaben erfüllt und ferner den geringsten Energiebedarf aufweist. Es wird somit eine optimal zugeschnittene Klimaanlage für ein Modell der technischen Anlage 1 in dem Raum 2 ermittelt. Das erfindungsgemäße Verfahren kann somit in der Planungsphase dazu benutzt werden, eine optimale Auslegung eines Klimatisierungssystems für eine technische Anlage rechnergestützt zu ermitteln, wodurch im tatsächlichen Betrieb der Anlage der Energiebedarf für das Klimatisierungssystem minimiert wird. Es besteht dabei auch die Möglichkeit, dass die durchgeführten Simulationen parallel durch Tests im Realbetrieb an Prüfständen verifiziert bzw. überprüft werden. Die dort gefundenen Ergebnisse können gegebenenfalls auch als Parameter bei der Simulation einfließen, und zwar indem sie in der oben erwähnten Datenbank abgespeichert werden.

Fig. 3 zeigt in perspektivischer Darstellung ein Ergebnis einer Simulation für ein vorgegebenes Klimatisierungssystem. Die CFD-Simulation beruht auf der Modellannahme einer Raumtemperatur von 15 °C mit einem Klimaanlagen-Eintritt am Boden 2c über die Eintrittsöffnung 3 von 0,1 Kilogramm pro Sekunde und 15 °C. Für die Lufttemperatur an der Oberseite 1a des Schaltschranks wurden 50 °C angenommen, und der Austritt der Luftströmung der Klimaanlage gegen die Umgebung erfolgt über die Öffnung 4 an der Raumseitenwand 2a. Fig. 3 zeigt hierbei das Raummodell 2 mit darin positionierter technischer Anlage 1, wobei in der y-Schnittebene E1 durch eine Farbcodierung gemäß der Skala S (in Fig. 3 als Graustufendarstellung wiedergegeben) die Temperaturverteilung in dieser Ebene E1 wiedergegeben ist. Im Bereich der oberen Öffnung 1d des Schaltschranks 1 bildet sich ein Temperaturbereich H mit sehr hoher Temperatur aus. Darüber hinaus ist in Fig. 3 ein Temperaturbereich C mit kalter Kühlluft im Bereich der Eintrittsöffnung 3 des Raums ersichtlich. Man erkennt in Fig. 3, dass die simulierten Ergebnisse gut mit den zu erwartenden Realbedingungen übereinstimmen. Gemäß den zu erwartenden Realbedingungen strömt kalte Luft über die Öffnung 3 ein und diese Luft wird schließlich durch die Wärmeabgabe der technischen Anlage 1 erwärmt.

Gemäß der Erfindung können nunmehr verschiedene Simulationsszenarien für unterschiedliche Parameter des Klimatisierungssystems berechnet werden und schließlich das am Besten geeignete Klimatisierungssystem mit dem niedrigsten Energiebedarf bestimmt wird. Hierbei werden ferner Klimatisierungsvorgaben berücksichtigt, welche insbesondere Betriebssicherheitsparameter sind, bei deren Einhaltung Beschädigungen der technischen Anlage, insbesondere durch Überhitzung von Komponenten, vermieden werden.

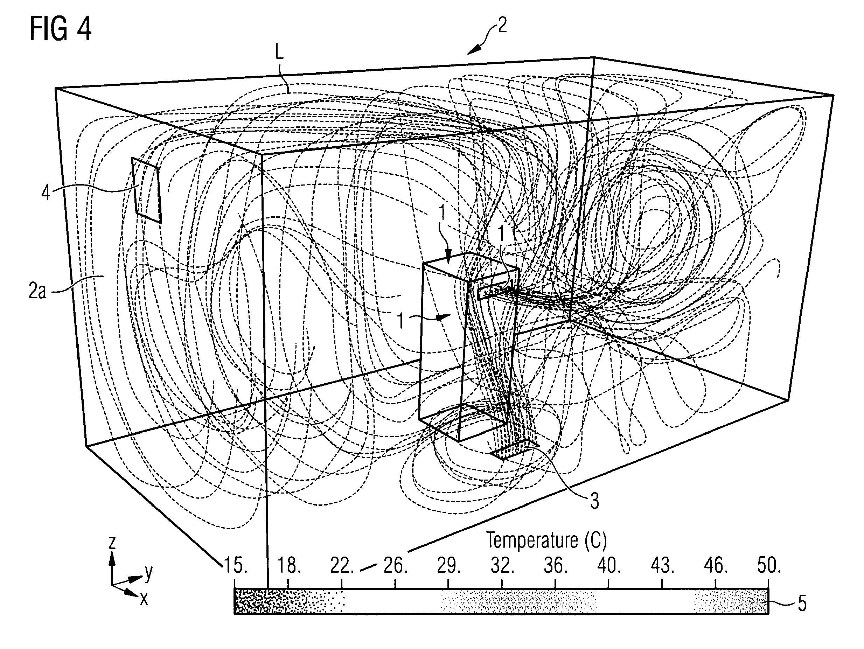

Fig. 4 zeigt eine Darstellung analog zu Fig. 3, wobei nunmehr jedoch die Luftströmung durch entsprechende Strömungslinien L wiedergegeben ist. Hierbei wird für jede Linie die entsprechende Temperatur entlang des Linienverlaufs gemäß der Farbskala S farbcodiert. In Fig. 4 ist diese Farbcodierung durch eine Graustufendarstellung wiedergegeben. Man erkennt in Fig. 4 insbesondere die Ausbildung von turbulenten Strömungsbereichen im Bereich der Seitenwand 2a. Darüber hinaus ist der Strömungsverlauf von der Eintrittsöffnung 3 entlang der Vorderseite des Schaltschranks hin zur oberen Öffnung 1d des Schaltschranks ersichtlich.

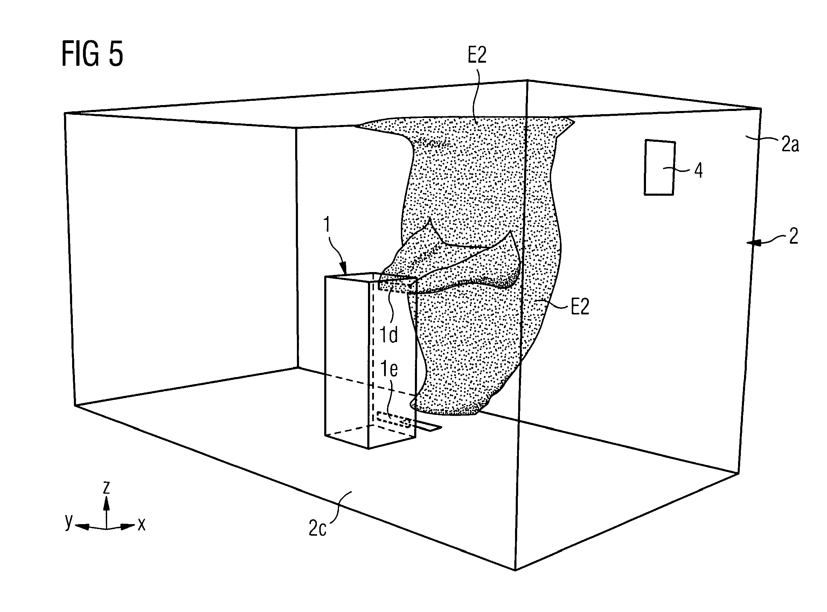

Fig. 5 zeigt eine perspektivische Ansicht analog zu Fig. 3 und Fig. 4, wobei nunmehr beispielhaft eine Iso-Temperaturfläche E2 mit einer Temperatur von 300 Kelvin als dunkel gefärbter Bereich im Raum 2 wiedergegeben ist.

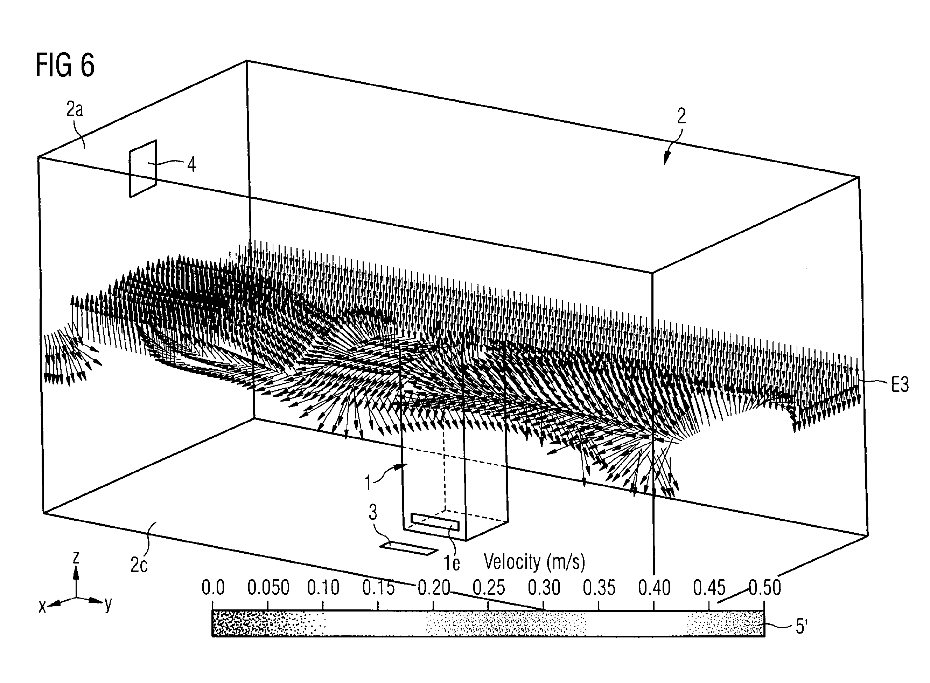

Fig. 6 zeigt eine weitere Darstellung analog zu den Darstellungen gemäß Fig. 3 bis Fig. 5, wobei nunmehr in dem Raummodell 2 in einer z-Schnittebene E3 die Geschwindigkeitsvektoren der Luftströmung im Raum wiedergegeben sind. Die Strömungsrichtung an den entsprechenden Stellen in der Ebene E3 wird hierbei durch die Richtung der Vektoren an diesen Stellen angezeigt. Die Geschwindigkeit der Strömung ist über die Farbe der Vektoren codiert, und zwar gemäß der Farbskala S', wobei in Fig. 6 die Farbcodierung als Graustufendarstellung wiedergegeben ist.

Auf der Basis der gemäß Fig. 3 bis Fig. 6 ermittelten Ergebnisse, welche für verschiedene Klimatisierungssysteme berechnet werden, kann dann erfindungsgemäß dasjenige Klimatisierungssystem ausgewählt werden, welches in Bezug auf den Energiebedarf optimal ist, d.h. welches den geringsten Energiebedarf aufweist. Mit dem soeben beschriebenen rechnergestützten Verfahren kann somit vor der Installation einer technischen Anlage in einem Raum ein geeignetes Klimatisierungssystem bzw. eine geeignete Einstellung des Klimatisierungssystems bestimmt werden. Hierdurch können für den Betreiber der technischen Anlage die Kosten minimiert werden, da er sein Klimatisierungssystem optimal unter Berücksichtigung des geringsten Energiebedarfs bzw. der geringsten Betriebskosten auswählen kann.

### Bezugszeichenliste

- 1: technische Anlage
- 1a: Oberseite der technischen Anlage
- 1b: Vorderseite der technischen Anlage
- 1c: Seitenfläche der technischen Anlage
- 1d, 1e: Öffnungen in der technischen Anlage
- 2: Raum
- 2a, 2b: Seitenwände des Raums
- 2c: Boden des Raums
- 3: Kühlluft-Eintrittsöffnung
- 4: Kühlluft-Austrittsöffnung
- C: kühler Luftströmungsbereich
- E1, E2, E3: Fläche
- H: Heißer Luftströmungsbereich
- L: Strömungslinien
- S: Temperaturskala
- S': Geschwindigkeitsskala

## Patentansprüche

1. Verfahren zur rechnergestützten Ermittlung eines Klimatisierungssystems zur Kühlung einer technischen Anlage (1), bei dem:
a) Parameter der technischen Anlage (1) und Raumparameter betreffend einem Raum (2), in dem die technische Anlage (1) aufzustellen ist, bereitgestellt werden;
b) für mehrere Klimatisierungssysteme, welche durch jeweilige Klimatisierungsparameter charakterisiert sind, jeweils die Wärmeverteilung der technischen Anlage (1) auf der Basis der Parameter der technischen Anlage (1), der Raumparameter und der jeweiligen Klimatisierungsparameter simuliert wird;
c) auf der Basis der simulierten Wärmeverteilungen unter Berücksichtigung von Klimatisierungsvorgaben aus den mehreren Klimatisierungssystemen dasjenige ermittelt wird, welches in Bezug auf ein oder mehrere vorbestimmte Kriterien optimal ist und die Klimatisierungsvorgaben erfüllt.

2. Verfahren nach Anspruch 1, bei dem die jeweiligen Simulationen in Schritt b) mit einem CFD-Verfahren der numerischen Strömungsberechnung (CFD = Computational Fluid Dynamics) durchgeführt werden.

3. Verfahren nach Anspruch 1 oder 2, bei dem die simulierten Wärmeverteilungen Temperatur- und/oder Luftströmungsverteilungen sind, welche vorzugsweise über eine graphische Benutzerschnittstelle wiedergegeben werden.

4. Verfahren nach einem der vorhergehenden Ansprüche, bei dem in den jeweiligen Simulationen in Schritt b) im Realbetrieb der technischen Anlage (1) und des Klimatisierungssystems ermittelte Parameter berücksichtigt werden.

5. Verfahren nach einem der vorhergehenden Ansprüche, bei dem das oder die vorbestimmten Kriterien die Betriebskosten des Klimatisierungssystems umfassen und als optimales Klimatisierungssystem in Schritt c) dasjenige ermittelt wird, welches die niedrigsten Betriebskosten bei gleichzeitiger Erfüllung der Klimatisierungsvorgaben aufweist.

6. Verfahren nach einem der vorhergehenden Ansprüche, bei dem das oder die vorbestimmten Kriterien den Energiebedarf des Klimatisierungssystems umfassen und als optimales Klimatisierungssystem in Schritt c) dasjenige ermittelt wird, welches den niedrigsten Energiebedarf bei gleichzeitiger Erfüllung der Klimatisierungsvorgaben aufweist.

7. Verfahren nach einem der vorhergehenden Ansprüche, bei dem die Parameter der technischen Anlage (1) thermische Parameter der in der technischen Anlage verbauten Anlagenteile umfassen, insbesondere die Verlustwärme der Anlagenteile.

8. Verfahren nach einem der vorhergehenden Ansprüche, bei dem die Raumparameter geometrische Parameter des Raums (2) umfassen, insbesondere die Abmessungen des Raums (2) mit der darin positionierten technischen Anlage (1) und den Positionen des Eintritts und Austritts der Kühlluft des Klimatisierungssystems.

9. Verfahren nach einem der vorhergehenden Ansprüche, bei dem die Klimatisierungsparameter Betriebsparameter des Klimatisierungssystems umfassen.

10. Verfahren nach Anspruch 9, bei dem die Betriebsparameter den Eintritt und Austritt des Kühlluftstroms des Klimatisierungssystems betreffen, insbesondere die in einer Zeiteinheit in den Raum (2) eintretende und/oder austretende Kühlluft und/oder die Temperatur des Kühlluftstroms bei Eintritt in den Raum (2) und/oder Austritt aus dem Raum (2).

11. Verfahren nach einem der vorhergehenden Ansprüche, bei dem die Klimatisierungsvorgaben Betriebssicherheitsvorgaben zur Vermeidung von Beschädigungen der technischen Anlage (1) umfassen.

12. Verfahren nach Anspruch 11, bei dem die Betriebssicherheitsvorgaben einzuhaltende Grenztemperaturen im Raum (2) und/oder Parametergrenzwerte der technischen Anlage (1) umfassen, insbesondere einen minimal erforderlichen Kühlluftstrom einzelner in der Anlage verbauter Anlagenteile und/oder eine maximale Kühlluft-Eintrittstemperatur für einzelne Anlagenteile.

13. Verfahren nach einem der vorhergehenden Ansprüche, bei dem die Parameter der technischen Anlage (1)und/oder die Raumparameter und/oder die Klimatisierungsvorgaben zumindest teilweise über eine Datenbank bereitgestellt werden.

14. Verfahren nach einem der vorhergehenden Ansprüche, bei dem die technische Anlage eine oder mehrere der folgenden Anlagen umfasst:
- eine IT-Anlage, insbesondere einen oder mehrere Server;
- eine Telekommunikationsanlage, insbesondere eine Mobilfunknetz- und/oder Festnetz-Anlage;
- eine medizintechnische Anlage;
- eine Stromversorgungsanlage;
- eine elektrotechnische Anlage;
- eine mechanische Anlage.

15. Computerprogrammprodukt mit einem auf einem maschinenlesbaren Träger gespeicherten Programmcode zur Durchführung eines Verfahrens nach einem der vorhergehenden Ansprüche, wenn das Programm auf einem Rechner abläuft.
